(19) Europäisches Patentamt European Patent Office Office européen des brevets

(11) **EP 4 516 566 B1**

(12) **EUROPEAN PATENT SPECIFICATION**

(45) Date of publication and mention
of the grant of the patent:
**27.05.2026   Bulletin 2026/22**

(21) Application number: **23796283.2**

(22) Date of filing: **21.04.2023**

(51) International Patent Classification (IPC):
*B60L 15/20* (2006.01)     *B60W 30/188* (2012.01)
*B60W 50/14* (2020.01)     *B60W 10/08* (2006.01)
*B60W 10/18* (2012.01)     *B60W 40/10* (2012.01)

(52) Cooperative Patent Classification (CPC):
**B60W 40/06; B60L 15/20; B60W 10/08;**
**B60W 10/18; B60W 40/10; B60W 50/14;**
B60L 2240/16; B60L 2240/461; B60L 2260/44;
B60W 2050/143; B60W 2510/08; B60W 2520/105;
B60W 2520/125; B60W 2520/28; B60W 2520/30;
(Cont.)

(86) International application number:
**PCT/JP2023/015977**

(87) International publication number:
**WO 2023/210541 (02.11.2023 Gazette 2023/44)**

(54) **CONTROL DEVICE AND PROGRAM**

STEUERUNGSVORRICHTUNG UND -PROGRAMM

DISPOSITIF DE COMMANDE ET PROGRAMME

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **25.04.2022   JP 2022071270**

(43) Date of publication of application:
**05.03.2025   Bulletin 2025/10**

(73) Proprietor: **DENSO CORPORATION**
**Kariya-city, Aichi 448-8661 (JP)**

(72) Inventors:
• **LIU, Haibo**
**Kariya-city, Aichi 448-8661 (JP)**
• **KAMIO, Shigeru**
**Kariya-city, Aichi 448-8661 (JP)**
• **KAWAI, Keisuke**
**Kariya-city, Aichi 448-8661 (JP)**

(74) Representative: **TBK**
**Bavariaring 4-6**
**80336 München (DE)**

(56) References cited:
DE-A1- 102015 204 094     JP-A- 2012 210 916
JP-A- 2019 093 761        JP-A- 2020 184 825
JP-A- H1 142 918          KR-B1- 102 382 092
US-A1- 2020 361 464

(52) Cooperative Patent Classification (CPC): (Cont.)
 B60W 2530/20; B60W 2552/35; B60W 2554/60;
 Y02T 10/72

# EP 4 516 566 B1

## Description

The present disclosure relates to a control device and a control program for a vehicle.

[Background Art]

JP 2019-93761 A describes a device capable of estimating the height of a bump when wheels of a vehicle come into contact with the bump. In the case where the bump is a wheel stopper, the above device allows an appropriate brake force to be generated before the wheels ride over the bump, and allows the vehicle to be stopped. In the case where the bump is not a wheel stopper, the above device allows an appropriate drive force necessary for riding over the bump to be generated and allows the vehicle to overcome the bump while inhibiting the vehicle from rushing out.

Furthermore, US 2020/361464 A1 discloses a parking assistance unit that comprises a step determination unit that executes a first determination process for determining whether a step that a vehicle wheel has contacted is a step for stopping the vehicle. A braking/drive force setting unit executes a stop request control for requesting stopping of a vehicle by increasing the braking force of the vehicle, when a step has been determined by the first determination process to be a step for stopping the vehicle.

[Summary of the Invention]

In the device described in JP 2019-93761 A, the drive force is gradually increased after the wheels come into contact with the bump, and the height of the bump is estimated based on a value of torque at the timing when the wheels start moving. The "timing when the wheels start moving" is determined based on measurements from a vehicle speed sensor.

However, it is difficult for a typical vehicle speed sensor to detect an extremely low vehicle speed, such as 1 km/h or less. Thus, in the device described in JP 2019-93761 A, the timing at which it is determined that the wheels have started moving is likely to be delayed as compared to the actual timing at which the wheels start moving. This may result in a delay in the timing at which the brake force is generated, and may cause the wheels to ride over the wheel stopper.

It is an objective of this disclosure to provide a control device capable of performing appropriate control when the wheels come into contact with a bump, and a program for this control device.

According to the invention, this object is achieved by a control device according to claim 1 and a computer program according to claim 19. Further features and advantageous modifications are shown in the dependent claims.

One aspect of the present disclosure provides a control device for a vehicle, including: a drive force acquisition unit that acquires a drive force which the vehicle is applying to a road surface; an acceleration acquisition unit that acquires an acceleration along a travel direction of the vehicle; an angle calculation unit that calculates a trajectory angle which is an angle between a trajectory of a rotation center axis of a wheel of the vehicle and the road surface, based on the drive force and the acceleration.

The control device configured as above is capable of calculating the trajectory angle, which is an angle between the rotation center axis of the wheel and the road surface. The trajectory angle changes depending on the shape of the bump that the wheel is in contact with. This allows the height of the bump to be estimated based on the calculated trajectory angle, thereby controlling the brake/drive force according to the estimate.

[Brief Description of the Drawings]

FIG 1 is a schematic diagram illustrating the configuration of a vehicle equipped with a control device according to a first embodiment.
FIG 2 is a schematic diagram illustrating the configuration of the control device according to the first embodiment.
FIG. 3 is an illustration of a state in which a wheel is in contact with a bump.
FIG. 4 is an illustration of a trajectory of a rotation center axis and a trajectory angle.
FIG. 5 is a flowchart of a process performed by the control device according to the first embodiment.
FIG. 6 is a timing diagram illustrating changes in vehicle speed etc. when control is being performed by the control device according to the first embodiment.
FIG. 7 is a timing diagram illustrating changes in vehicle speed, etc. when control is being performed by the control device according to the first embodiment.
FIG. 8 is a schematic diagram of a control device according to a second embodiment.
FIG. 9 is a flowchart of a process performed by the control device according to the second embodiment.
FIG. 10 is a flowchart of a process performed by the control device according to the second embodiment.

FIG. 11 is a schematic diagram illustrating the configuration of a control device according to a third embodiment.

FIG. 12 is an illustration of a correspondence relationship between height of a bump and ride-up distance when a wheel is in contact with the bump.

FIG. 13 is a flowchart of a process performed by the control device according to the third embodiment.

[Description of the Embodiments]

The embodiments will be described with reference to the accompanying drawings. In the drawings, to facilitate understanding of the description, the same components are assigned the same reference numbers and duplicated description thereof will be omitted.

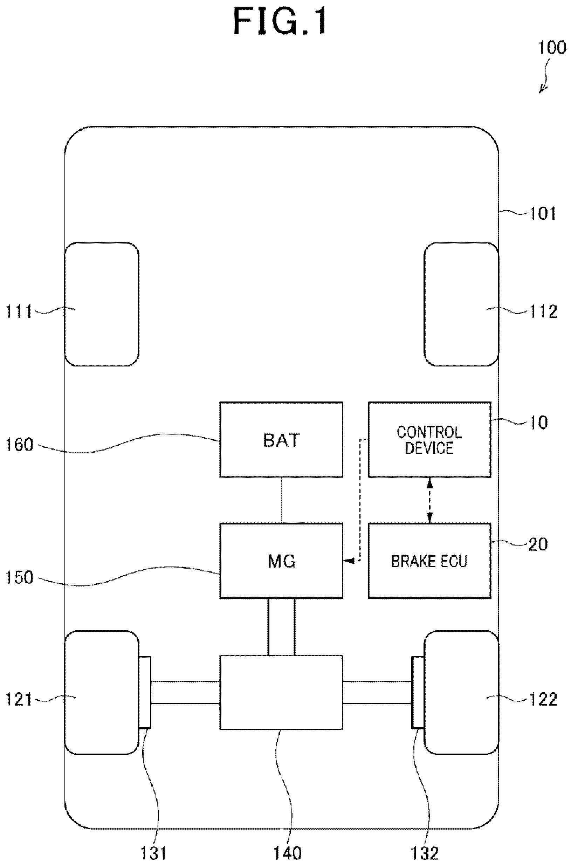

A first embodiment will now be described. The control device 10 of the present embodiment is mounted to a vehicle 100 and is configured as a device for controlling the vehicle 100. Before describing the control device 10, the configuration of the vehicle 100 will first be described with reference to FIG. 1.

The vehicle 100 is a vehicle that travels based on driver's driving operations. However, in cases such as when the wheels come into contact with a bump, some of the driving operations (e.g. braking) may be performed automatically by the control device 10. The vehicle 100 includes a vehicle body 101, wheels 111, 112, 121, 122, a rotating electric machine 150, and a battery 160.

The vehicle body 101 is the main part of the vehicle 100, and is referred to as a "body". The wheel 111 is a wheel provided on the left front portion of the vehicle body 101, and the wheel 112 is a wheel provided on the right front portion of the vehicle body 101. The front wheels, 111 and 112, are provided as non-driving wheels in the present embodiment.

The wheel 121 is a wheel provided on the left rear portion of the vehicle body 101, and the wheel 122 is a wheel provided on the right rear portion of the vehicle body 101. The rear wheels 121 and 122 are provided as driving wheels in the present embodiment. That is, the wheels 121 and 122 rotate by the drive force of the rotating electric machine 150 described later, and the vehicle 100 is thereby driven.

As above, the vehicle 100 of the present embodiment is configured as a so-called "rear-wheel drive" vehicle. In an alternative, the vehicle 100 may be configured as a front-wheel drive vehicle or a four-wheel drive vehicle. In the latter case, in addition to the rotating electric machine 150 for driving the rear wheels, a rotating electric machine for driving the front wheels may be separately provided.

A brake device 131 is provided for the wheel 121, and a brake device 132 is provided for the wheel 122. Both the brake device 131 and the brake device 132 are brake devices that apply brake forces to the wheels using hydraulic pressure. Such brake devices may be provided not only for the driving wheels, but also for the non-driving wheels, i.e., the wheels 111 and 112. The operations of the brake devices 131 and 132 are controlled by the brake ECU 20 described later.

The rotating electric machine 150 is a device that is supplied with electric power from the battery 160 described later and generates the drive force for rotating the wheels 121 and 122, that is, the drive force necessary for driving of the vehicle 100. The rotating electric machine 150 is a so-called "motor generator". The drive force generated by the rotating electric machine 150 is transmitted to each of the wheels 121 and 122 via a powertrain 140, causing the wheels 121 and 122 to rotate. The transfer of power between the battery 160 and the rotating electric machine 150 is implemented via an inverter, which is not illustrated in FIG. 1.

The rotating electric machine 150 is capable of generating a drive force to accelerate the vehicle 100, and is also capable of generating a brake force to decelerate the vehicle 100 by regeneration.

Braking of the vehicle 100 may be performed by the rotating electric machine 150, or by the brake devices 131 and 132 described above.

The battery 160 is a rechargeable battery for supplying the rotating electric machine 150 with drive power. In the present embodiment, a lithium-ion battery is used as the battery 160. Regenerative power generated by the rotating electric machine 150 during braking is supplied to the battery 160 via an inverter (not shown), and the battery 160 is thereby charged.

The vehicle 100 is equipped with a brake ECU 20, which is separate from the control device 10. Each of the control device 10 and the brake ECU 20 is configured as a computer system that includes a CPU, a ROM, a RAM, etc. They are capable of bidirectionally communicating with each other via a network provided in the vehicle 100.

The brake ECU 20 performs processes to control the operations of the brake devices 131 and 132 according to instructions from the control device 10.

The control device 10 and the brake ECU 20 may not be separate from each other as in the present embodiment. For example, the functions of the brake ECU 20 may be integrated into the control device 10. To implement the functions of the control device 10, described later, the configuration of the device 10 is not limited to any specific configuration.

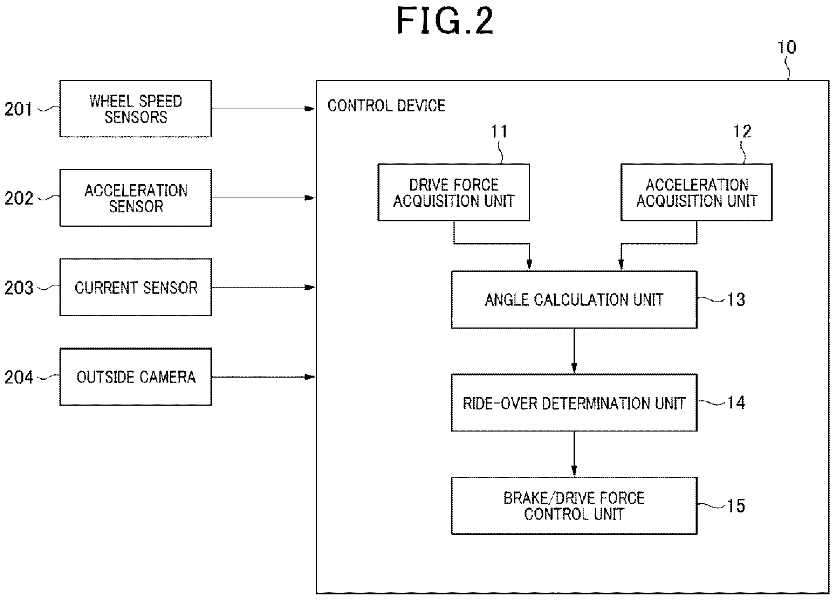

The vehicle 100 is equipped with a number of sensors for measuring various physical quantities, which are omitted in FIG. 1. As illustrated in FIG. 2, some of the above sensors include wheel speed sensors 201, an acceleration sensor 202, a current sensor 203, and an outside camera 204.

The wheel speed sensors 201 are sensors for measuring the rotational speeds per unit time of the wheels 111, etc. The four wheels 111, 112, 121, and 122 are each provided with a wheel speed sensor 201, although in FIG. 2, the wheel speed sensors 201 are schematically depicted as a single block. The signals indicating rotational speeds measured by the wheel speed sensors 201 are transmitted to the control device 10. The control device 10 is capable of determining the travel speed of the vehicle 100 based on these signals.

The acceleration sensor 202 is a sensor for detecting accelerations of the vehicle 100. The acceleration sensor 202 is attached to the vehicle body 101. The acceleration sensor 202 is configured as a 6-axis acceleration sensor capable of detecting not only longitudinal, lateral and vertical accelerations of the vehicle body 101, but also pitch, roll and yaw rotational accelerations. Signals indicating the respective accelerations detected by the acceleration sensor 202 are transmitted to the control device 10.

The current sensor 203 is a sensor for detecting a value of drive current flowing through the rotating electric machine 150. A signal indicating the value of the drive current detected by the current sensor 203 is input to the control device 10. The control device 10 is capable of determining the magnitude of the drive force generated by the rotating electric machine 150 based on the value of the drive current as input.

The outside camera 204 is a camera that captures images of surroundings of the vehicle 100, and is, for example, a CMOS camera. Data of the images captured by the outside camera 204 is input to the control device 10. By processing the images, the control device 10 is capable of determining presence or absence of an obstacle (e.g., a bump, such as a wheel stopper) in the surroundings of the vehicle 100, and of recognizing its shape. In addition to or instead of the outside camera 204, other sensors may be provided to detect the situation around the vehicle 100. Such sensors may include, for example, a LIDAR sensor or radar.

Referring again to FIG. 2, the configuration of the control device 10 will now be described. The control device 10 includes, as functional blocks representing its functions, a drive force acquisition unit 11, an acceleration acquisition unit 12, an angle calculation unit 13, a ride-over determination unit 14, and a brake/drive force control unit 15.

The drive force acquisition unit 11 is configured to acquire the drive force that the vehicle 100 (specifically, the driving wheels of the vehicle 100) is applying to the road surface. The drive force acquisition unit 11 acquires the value of the drive current flowing through the rotating electric machine 150 using the current sensor 203 described above, and calculates and acquires the drive force based on the magnitude of the drive current. The drive force acquisition unit 11 may calculate the torque of the driving wheels based on the magnitude of the drive current, and convert the calculated torque into the above drive force along the travel direction of the vehicle 100.

The acceleration acquisition unit 12 is configured to acquire various accelerations based on signals from the acceleration sensor 202. The accelerations acquired by the acceleration acquisition unit 12 include the acceleration Gx along the travel direction (i.e., the longitudinal direction) of the vehicle 100 and the acceleration Gy along the lateral direction of the vehicle 100. The acceleration Gx is also referred to as a "longitudinal acceleration" and the acceleration Gy is also referred to as a "lateral acceleration." Both of these accelerations are acquired as numerical values in units of "G" (acceleration of gravity), for example, 0.5G.

The angle calculation unit 13 is configured to calculate a trajectory angle. As used herein, the term "trajectory angle" refers to an angle between a trajectory of a rotation center axis of the wheel 111, etc. and a road surface.

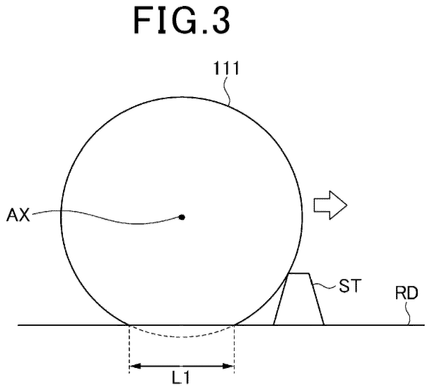

FIG. 3 is a schematic diagram of a state where the wheel 111 is on the road surface RD. The road surface RD is provided with a bump ST that serves as a wheel stopper, and a portion of the wheel 111 is in contact with the bump ST. When the vehicle 100 attempts to move further to the right (that is, toward the bump ST) from the state illustrated in FIG. 3, the wheel 111 will ride up the bump ST.

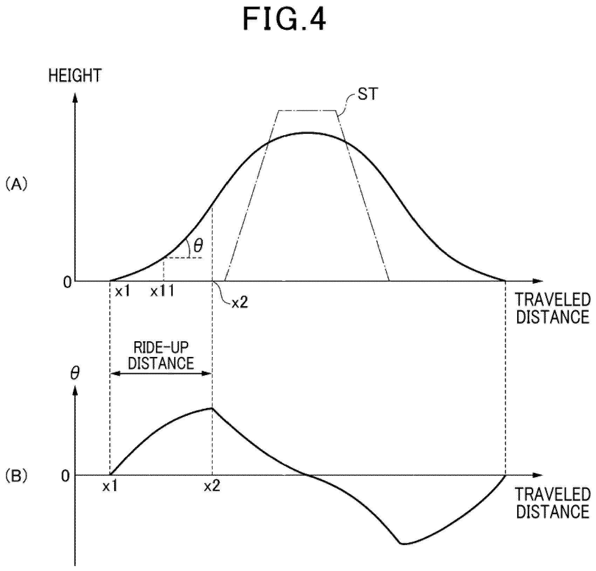

The graph indicated by the solid line in FIG. 4(A) illustrates the relationship between traveled distance (horizontal axis) of the vehicle 100 and height (vertical axis) of the rotation center axis AX of the wheel 111 when traveling to the right as described above. This graph may be said to represent the trajectory of the rotation center axis AX during travel of the vehicle 100. $\theta$, as illustrated in FIG. 4(A), represents the trajectory angle when the vehicle 100 is at position x11. Such a trajectory angle $\theta$ may be defined for each position of the vehicle 100.

As described above, the "trajectory angle" is the angle between the trajectory of the rotation center axis AX of the wheel 111, etc. and the road surface, where the "trajectory of the rotation center axis AX" refers to the trajectory of the rotation center axis AX as viewed along its lateral direction of the vehicle 100.

The angle calculation unit 13 calculates the trajectory angle $\theta$ at the current position based on both the drive force acquired by the drive force acquisition unit 11 and the acceleration Gx acquired by the acceleration acquisition unit 12. The specific calculation method will now be described.

By the way, the trajectory of the rotation center axis AX, as illustrated in FIG. 4(A), reflects to some extent the shape of the bump ST, which is indicated by the dashed-dotted line in FIG. 4(A). The reason why the shapes of the bump and the trajectory are different is that the wheel 111 is not a rigid body and deforms when pressed against the bump ST.

Returning to FIG. 2, the description will be continued. The ride-over determination unit 14 is configured to determine whether the vehicle 100 should ride over the bump based on the trajectory angle $\theta$. A specific determination method will now be described.

The brake/drive force control unit 15 is configured to perform a process of adjusting the brake/drive force of the vehicle 100 by controlling the operations of the rotating electric machine 150 and the brake devices 131 and 132. When the ride-over determination unit 14 determines that the vehicle 100 should ride over the bump, the brake/drive force control unit 15 controls the brake/drive force so that the wheel 111, etc. of the vehicle 100 rides over the bump. When the ride-over determination unit 14 determines that the vehicle 100 should not ride over the bump, the brake/drive force control unit 15 controls the brake/drive force so that the vehicle 100 makes a stop.

Such control of the brake/drive force is performed by the control device 10 temporarily overriding the driver's driving operation. Therefore, for example, even if the accelerator pedal is accidentally depressed by the driver while the wheel 111 is in contact with the wheel stopper, this can prevent occurrence of a situation where the vehicle 100 rides over the wheel stopper.

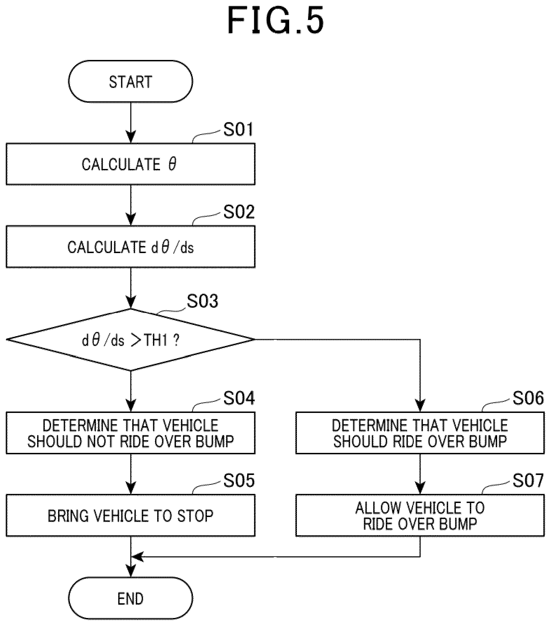

A process flow performed by the control device 10 will now be described mainly with reference to the flowchart in FIG. 5. The series of process steps illustrated in FIG. 5, for example, begin at or just before the time when the wheels 111, etc. of the vehicle 100 come into contact with a bump, and is performed repeatedly at each control period.

First, at step S01 of the process, the angle calculation unit 13 calculates the current trajectory angle θ. The angle calculation unit 13 first calculates a vertical load Fz using the following Equation 1 (Eq. 1). The vertical load Fz is a force applied downward to the wheels 111 and 112, which are the non-driving wheels. The vertical load Fz is calculated as a sum of forces received by the respective wheels 111 and 112.

$$F_z \; = \; mg\left(\tfrac{l_r}{l} - \tfrac{G_x h}{l}\right) \; + \; d_s V_s tan\theta_{old} \;\;\cdots\cdots(\text{Eq. 1})$$

The factor "m" in the first term on the right-hand side of Eq. 1 is the weight of the vehicle 100. The factor "g" is the acceleration of gravity. The factor "l" is the wheelbase length of the vehicle 100. The factor "lr" is the length along the longitudinal direction from the center of gravity of vehicle 100 to the rotation center axis of the rear wheels (wheels 121 and 122). The factor "Gx" is the acceleration Gx described above. The factor "h" is the height from the road surface to the center of gravity of the vehicle 100. The first term on the right-hand side of Eq. 1 represents the downward component of the force applied to each of the wheels 111 and 112 as a dynamic load during travel of the vehicle 100.

The factor "ds" in the second term on the right-hand side of Eq. 1 is a damping coefficient of a damper (not shown) of the vehicle 100. The factor "Vs" is the travel speed of the vehicle 100 along the longitudinal direction. Vs may be calculated based on the signals from the wheel speed sensor 201, for example. The factor "θold" is a value of the trajectory angle θ calculated in the previous control cycle. When the process in FIG. 5 is performed for the first time, for example, zero is used as the value of θold. The second term on the right-hand side of Eq. 1 represents the force applied to each of the wheels 111 and 112 as the damper extends and contracts.

After calculating the vertical load Fz as described above, the angle calculation unit 13 calculates the trajectory angle θ using the following Equation 2 (Eq. 2).

$$\theta \; = \; asin\left(\tfrac{mg \times G_x - F_{mg}cos\theta_{old}}{F_z}\right) \;\;\cdots\cdots(\text{Eq. 2})$$

The factor "Fmg" on the right-hand side of Eq. 2 is the drive force acquired by the drive force acquisition unit 11, that is, the drive force applied to the road surface by the driving wheels of the vehicle 100.

As described above, the angle calculation unit 13 of the present embodiment calculates the trajectory angle θ at the current position based on both the drive force acquired by the drive force acquisition unit 11 and the acceleration Gx acquired by the acceleration acquisition unit 12.

At step S02, subsequent to step S01, the process step of calculating an amount of change in angle is performed. The amount of change in angle is an amount of change in the trajectory angle when the vehicle 100 has traveled a predetermined distance. The amount of change in angle is expressed as dθ/ds, where ds is the predefined distance and dθ is the amount of change in the trajectory angle. The amount of change in angle is calculated using the following Equation 3 (Eq. 3).

$$\frac{d\theta}{d_s} \; = \; \frac{\theta}{V_x} \;\;\cdots\cdots(\text{Eq. 3})$$

The denominator on the right-hand side of Eq. 3 is the travel speed along the longitudinal direction of the vehicle 100. The numerator on the right-hand side is the time derivative of the trajectory angle θ.

At step S03, subsequent to step S02, it is determined whether the amount of change in angle, dθ/ds, calculated as described above exceeds a threshold TH1. If the amount of change in angle, dθ/ds, exceeds the threshold TH1, the process proceeds to step S04.

Since the amount of change in angle, $d\theta/ds$, is relatively large at step S04, it is inferred that the bump is high and is a wheel stopper. Therefore, the ride-over determination unit 14 determines that the vehicle 100 should not ride over the bump.

At step S05, subsequent to step S04, the brake/drive force control unit 15 performs a process step of immediately stopping the vehicle 100. This allows the vehicle 100 to be brought to a stop with the wheels 111 and 112 in almost the same state as immediately after contact with the bump.

If the amount of change in angle, $d\theta/ds$, is less than or equal to the threshold TH1 at step S03, the process proceed to step S06. At step S06, the ride-over determination unit 14 determines that the vehicle 100 should ride over the bump. In this case, the brake/drive force control unit 15 continues to generate the drive force of the vehicle 100. The vehicle 100 will then continue to travel beyond the bump.

As described above, the ride-over determination unit 14 of the present embodiment determines whether the vehicle 100 should ride over the bump based on the amount of change in angle, $d\theta/ds$. Specifically, if the amount of change in angle, $d\theta/ds$, exceeds the threshold TH1, it is determined that the vehicle 100 should not ride over the bump.

As a method for determining whether to ride over a bump according to the height of the bump, for example, a method based on the vehicle speed measured by the vehicle speed sensor may be used, as described in PTL 1. However, it is difficult for the vehicle speed sensor to detect an extremely slow vehicle speed, such as 1 km/h or less. Thus, in the device described in PTL 1, the timing at which it is determined that the wheels have started to move is likely to be delayed as compared to the actual timing at which they start to move. As a result, the timing at which brake force is generated is delayed, and a situation in which the wheels ride over the wheel stopper may occur.

In contrast, in the control device 10 of the present embodiment, the trajectory angle $\theta$ is calculated based on both the drive force acquired by the drive force acquisition unit 11 and the acceleration Gx acquired by the acceleration acquisition unit 12, and a determination is made as to whether the bump should be ridden over based on the amount of change in angle, $d\theta/ds$, which is the slope of the trajectory angle $\theta$. Since the drive force and acceleration Gx can be acquired relatively accurately even when the vehicle speed is low, the above determination can be made quickly and accurately.

In Eq. 1, which is used to calculate the angle of the travel trajectory $\theta$, the travel speed of the vehicle, Vs, is used. However, when the vehicle speed is low, say around 1 km/h, even if the value of Vs is calculated as 0, there is no significant effect on the accuracy of the trajectory angle $\theta$ calculated using Eq. 1.

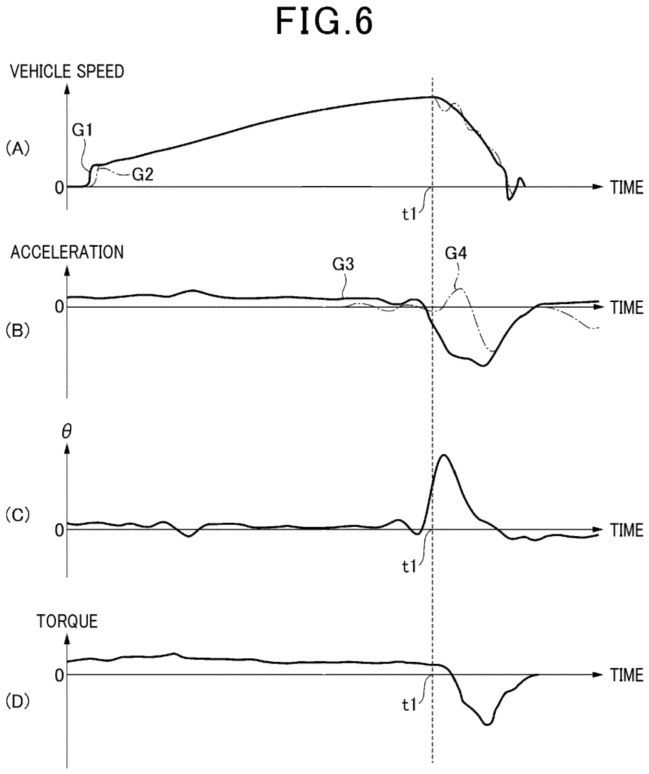

FIG. 6 illustrates an example of changes in the vehicle speed, etc. when the wheels 111 and 112 come into contact with a bump during travel of the vehicle 100. In FIG. 6(A), G1 represents changes in the vehicle speed calculated from the rotational speeds of the rear wheels 121 and 122. G2 represents changes in the vehicle speed calculated from the rotational speeds of the front wheels, 111 and 112.

In FIG. 6(B), G3 represents changes in the acceleration Gx, and G4 represents changes in the acceleration Gy. The graph in FIG. 6(C) represents changes in the trajectory angle $\theta$. The graph in FIG. 6(D) represents changes in the drive force acquired by the drive force acquisition unit 11. In FIG. 6, time t1 is the time when the wheels 111 and 112 come into contact with the bump that is a wheel stopper.

In the example illustrated in FIG. 6, the amount of change in angle, $d\theta/ds$, exceeds the threshold TH1 immediately after time t1, and the brake force is automatically applied immediately thereafter (as illustrated in FIG. 6(D)). Therefore, even if the driver continues to depress the accelerator pedal, the vehicle 100 will be brought to a stop immediately after coming into contact with the bump, without riding over it.

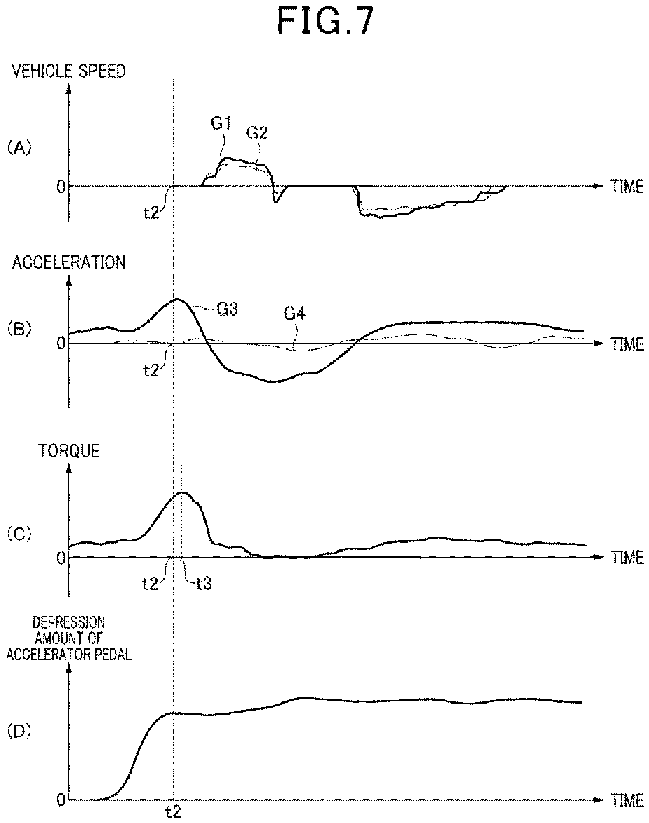

FIG. 7 illustrates an example of a situation where the accelerator pedal is depressed when the vehicle 100 is stationary near the bump that is a wheel stopper. In FIG. 7(A), G1 represents changes in the vehicle speed calculated from the rotational speeds of the rear wheels 121 and 122. G2 represents changes in the vehicle speed calculated from the rotational speeds of the front wheels, 111 and 112.

G3 in FIG. 7(B) represents changes in the acceleration Gx, and G4 represents changes in the acceleration Gy. The graph in FIG. 7(C) represents changes in the drive force acquired by the drive force acquisition unit 11. The graph in FIG. 7(D) represents changes in the operation amount (amount of depression) of the accelerator pedal. In FIG. 7, time t2 is the time when the wheels 111 and 112 come into contact with the bump that is the wheel stopper immediately after the accelerator pedal is depressed.

In this example, the amount of change in angle, $d\theta/ds$, exceeds the threshold TH1 at time t3 immediately after time t2, and the drive force is automatically set to 0 immediately after time t2 (as illustrated in FIG. 7(C)). Since the time period from time t2 to time t3 is approximately 0.3 seconds, the vehicle 100 is brought to a stop almost simultaneously with the wheels 111 and 112 coming into contact with the wheel stopper. As described above, in the present embodiment, immediately after the wheels 111 and 112 come into contact with the bump, a determination is made as to whether to ride over the bump, and the appropriate action is taken quickly.

The case has been described where the vehicle 100 is a rear-wheel drive vehicle and the front wheels come into contact with a bump. The similar process as above may be performed even in the case where vehicle 100 is a front-wheel drive vehicle. In this case, the value of the trajectory angle $\theta$ may be calculated by setting the value of cos $\theta$old in Eq. 2 to one.

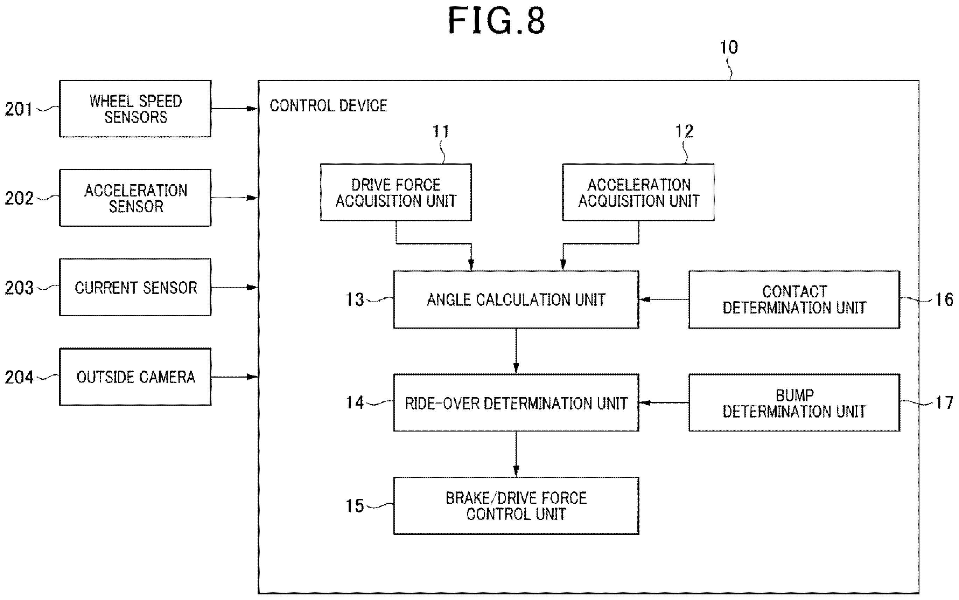

A second embodiment will now be described. The following describes in detail the components in the second embodiment that differ from those in the first embodiment, while detailed descriptions of the components in the second embodiment that are common to those in the first embodiment are omitted as appropriate. As illustrated in FIG. 8, the control device 10 of the present embodiment further includes a contact determination unit 16 and a bump determination unit 17.

The contact determination unit 16 is configured to determine whether the vehicle 100 is in a double-wheel contact state where both left and right wheels are in contact with a bump, or in a single-wheel contact state where only one of the left and right wheels is in contact with the bump. The method of determining in which state the vehicle is will be described later.

The bump determination unit 17 is configured to determine whether there is a bump in the vicinity of the vehicle 100. The determination unit 17 determines whether there is a bump ahead in the travel direction of the vehicle 100 before the wheels 111 etc. of the vehicle 100 actually come into contact with the bump. Such a determination may be made based on images captured by the outside camera 204.

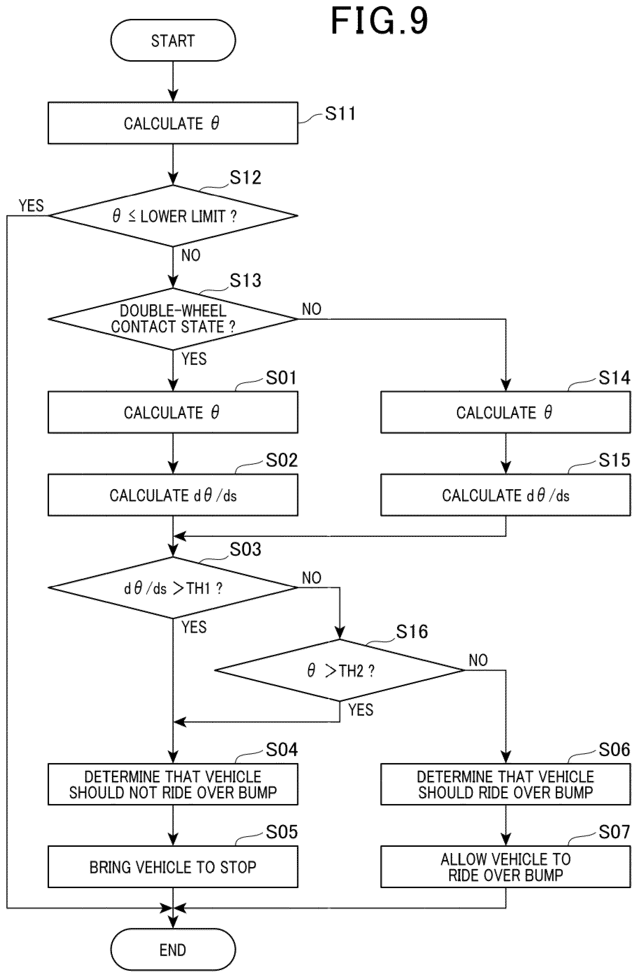

The series of process steps illustrated in FIG. 9 are performed by the control device 10 according to the present embodiment instead of the series of process steps illustrated in FIG. 3. Of the process steps illustrated in FIG. 9, the process steps that are the same as those illustrated in FIG. 3 are assigned the same reference numbers as those in FIG. 3 (e.g., S01).

First, at step S11, for example, the value of the current trajectory angle θ is calculated in the same manner as described above. At step S12, subsequent to step S11, it is determined whether the calculated value of the trajectory angle θ is less than or equal to a predefined lower limit. The lower limit is a pre-set value of the trajectory angle θ that corresponds to a small bump of about 1 cm. If the value of the trajectory angle θ is less than or equal to the lower limit, the process illustrated in FIG. 9 is immediately ended. That is, the ride-over determination unit 14 of the present embodiment does not make a determination as to whether the vehicle 100 should ride over the bump if the trajectory angle θ is less than or equal to the predefined lower limit value. This may reduce the computational load on the control device 10.

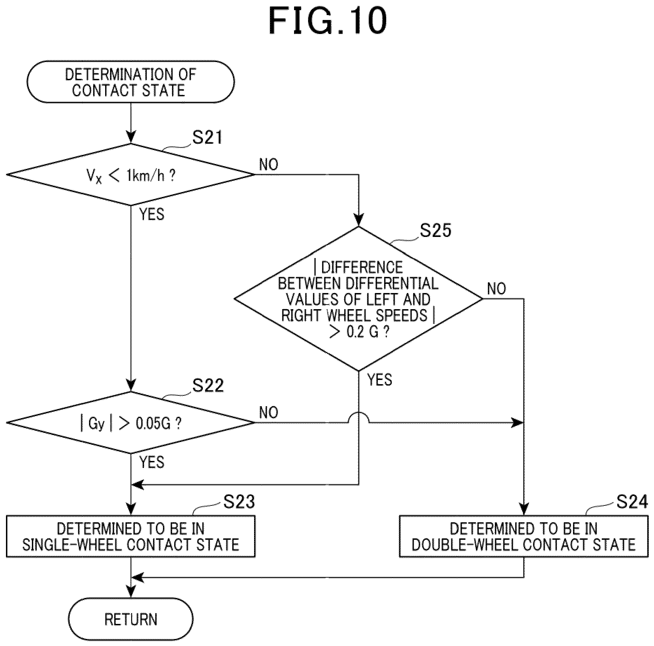

If the value of the trajectory angle θ exceeds the lower limit at step S12, the process proceeds to step S13. At step S13, the contact determination unit 16 determines whether the vehicle 100 is in the double-wheel contact state. The contact determination unit 16 performs such determination by performing the process illustrated in FIG. 10, for example.

First, at step S21 in FIG. 10, it is determined whether the travel speed Vx of the vehicle 100 is lower than 1 km/h. Such determination is made based on measurements from the wheel speed sensor 201. The speed of 1 km/h is a value in the vicinity of the lower limit of the vehicle speed that is measurable by the wheel speed sensor 201. Therefore, the determination made at step S21 can be said to be a determination of whether a value higher than zero has been detected as the travel speed Vx.

If the travel speed Vx is lower than 1 km/h, the process proceeds to step S22. At step S22, it is determined whether the absolute value of the acceleration Gy measured by the acceleration acquisition unit 12 is higher than 0.05 G. If the absolute value of the acceleration Gy is higher than 0.05 G, the process proceeds to step S23. At step S23, it is determined that the vehicle is in the single-wheel contact state. That is, it is determined that only one of the wheels 111 and 112 is in contact with the bump, and the other is not in contact with the bump.

At step S22, if the absolute value of the acceleration Gy is lower than or equal to 0.05 G, the process proceeds to step S24. At step S24, it is determined that the vehicle is in the double-wheel contact state. That is, it is determined that both the wheels 111 and 112 are in contact with the bump.

If the travel speed Vx is higher than or equal to 1 km/h at step S21, the process proceeds to step S25. At step S25, the difference between the differential value of the vehicle speed calculated based on the rotational speed of the left wheel 111 and the differential value of the vehicle speed calculated based on the rotational speed of the right wheel 112 is calculated, and then it is determined whether the absolute value of the difference is greater than 0.2G. If the absolute value of the difference is greater than 0.2G, the process proceeds to step S23, and it is determined that the vehicle is in the single-wheel contact state. If the absolute value of the difference is less than or equal to 0.2G, the process proceeds to step S24, and it is determined that the vehicle is in the double-wheel contact state.

Returning to FIG. 9, the description is continued. At step S13, if it is determined that the vehicle is in the double-wheel contact state, then the process proceeds to step S01. Step S01 and the subsequent steps thereto are the same as in the first embodiment (FIG. 5), except in the case where the answer is NO at step S03.

If it is determined at step S13 that the vehicle is in the single-wheel contact state, the process proceeds to step S14. At step S14, calculation of the current trajectory angle θ is performed by the angle calculation unit 13. Here, instead of Eq. 1, the following Equation 4 (Eq. 4) is used to first calculate Fz.

$$F_z \; = \; mg\left(\frac{l_r}{l} - \frac{2G_x h}{l}\right) \; + \; d_s V_s tan\theta_{old} \cdots\cdots (\text{Eq. 4})$$

Next, the trajectory angle θ is calculated by using the following Equation 5 (Eq. 5) instead of Eq. 2.

$$\theta \; = \; asin\left(\frac{mg \times 2G_x - 2F_{mg}cos\theta_{old}}{F_z}\right) \; \cdots (\text{Eq. 5})$$

At step S15, subsequent to step S14, the amount of change in angle, dθ/ds, is calculated. The amount of change in angle, dθ/ds, may be calculated using the time derivative of the trajectory angle θ calculated at step S14, according to Eq. 3 described above. After step S15, the process proceeds to step S03.

At step S03, in the present embodiment, if the amount of change in angle, dθ/ds, is less than or equal to the threshold TH1, the process proceeds to step S16. At step S16, it is determined whether the value of the trajectory angle θ calculated at step S14 is greater than the threshold TH2. If the value of the trajectory angle θ is greater than the threshold TH2, then the process proceeds to step S04. Otherwise, the process proceeds to step S06. The subsequent steps are the same as in the first embodiment.

In the present embodiment, even if the amount of change in angle, dθ/ds, is less than or equal to the threshold T1, a determination is made that the bump should not be ridden over if the value of the trajectory angle θ is greater than the threshold T2. This allows the determination to be made as to whether to ride over the bump with higher accuracy.

The angle calculation unit 13 of the present embodiment changes the method of calculating the trajectory angle θ according to the result of determination by the contact determination unit 16 (at step S13). Using different equations for the two states, that is, the double-wheel contact state and the single-wheel contact state, allows the trajectory angle θ to be calculated accurately.

As described with reference to FIG. 10, the contact determination unit 16 determines whether the vehicle is in the double-wheel contact state or in the single-wheel contact state based on the acceleration Gy, which is the lateral acceleration of the vehicle 100 (at step S22). The contact determination unit 16 also determines whether the vehicle is in the double-wheel contact state or in the single-wheel contact state based on the rotational speeds of the left and right wheels (at step S25). The latter determination is made only when the travel speed Vx of the vehicle 100 is higher than or equal to the predefined speed (at step S21). This allows a determination as to whether the vehicle is in the double-wheel contact state or in the single-wheel contact state to be made accurately.

The series of process steps illustrated in FIG. 9 may be initiated from the time when it is determined by the bump determination unit 17 that there is a bump ahead in the travel direction of the vehicle 100. In this case, the process step S11 may include estimating the height of the bump by some method (e.g., image processing). The process step S12 may include determining (while accepting low accuracy) whether the height of the bump is less than or equal to the lower limit. In a case where such a determination is to be made, the ride-over determination unit 14 may perform the necessary process to determine whether the vehicle 100 should ride over the bump only if the bump determination unit 17 has previously determined that there is a bump in the vicinity of the vehicle 100. This can reduce the computational load of the control device 10.

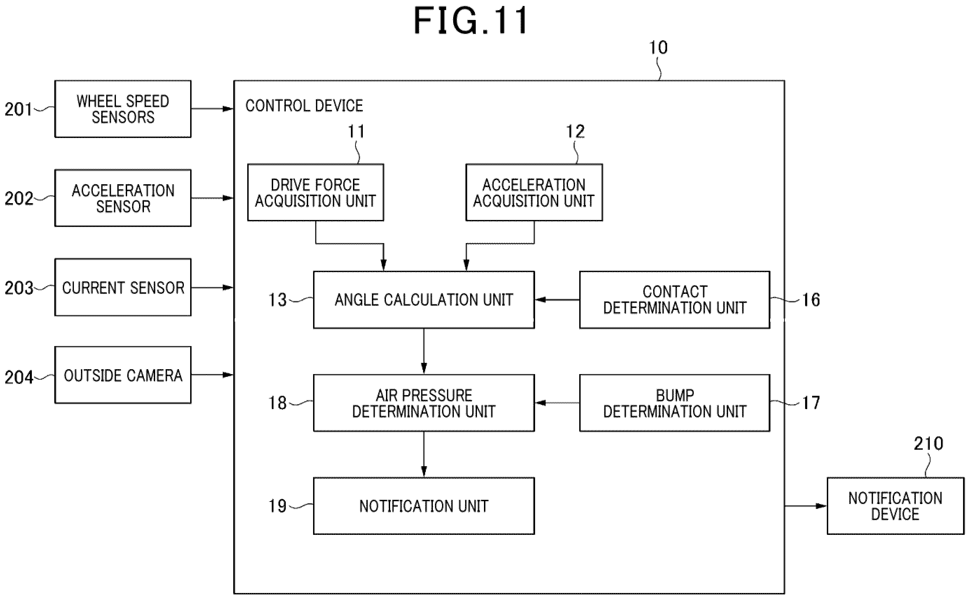

A third embodiment will now be described. The following describes in detail the components in the third embodiment that differ from those in the second embodiment, while detailed descriptions of the components in the third embodiment that are common to those in the second embodiment are omitted as appropriate. As illustrated in FIG. 11, the control device 10 of the present embodiment does not include the ride-over determination unit 14 and the brake/drive force control unit 15, but instead includes an air pressure determination unit 18 and a notification unit 19. The vehicle 100 is further equipped with a notification device 210.

The air pressure determination unit 18 is configured to determine whether the air pressure in the wheel 111, etc. is sufficiently high based on the trajectory angle θ. The specific determination method is described later.

The notification unit 19 is configured to provide a notification to occupants of the vehicle 100 when the air pressure is determined by the air pressure determination unit 18 to be inadequate. The notification unit 19 provides such a notification by operating the notification device 210. The notification device 210 is, for example, a warning lamp installed in the instrument panel.

Before describing the method of determining the air pressure by the air pressure determination unit 18, a ride-up distance will now be described first.

The graph in FIG. 4(B) illustrates an example of changes in the trajectory angle θ when the vehicle 100 rides over the bump ST, as illustrated in FIG. 4(A). x1 in FIG. 4 represents the position of the vehicle 100 when the wheel 111 etc. comes into contact with the bump ST. x2 in FIG. 4 represents the position of the vehicle 100 when the wheel 111 etc. leaves the road surface. This position corresponds to the inflection point in the graph of FIG. 4(A) and corresponds to the peak in the graph of FIG. 4(B).

The "ride-up distance" is a distance traveled by the vehicle 100 between x1 and x2, that is, a distance between the time when the wheel 111, etc. comes into contact with the bump ST and the time when the wheel 111, etc. leaves the road surface. In other words, the ride-up distance may also be said to be a distance traveled by the vehicle 100 during the time period from when the trajectory angle θ begins to increase to when the trajectory angle θ begins to decrease.

The ride-up distance defined in this manner is correlated with the length along the longitudinal direction, of the portion of the wheel 111, etc. (L1 in FIG. 3) that is in contact with the road surface RD when the vehicle 100 is parked on the flat road surface RD. Therefore, the lower the air pressure in the wheel 111, etc., the longer L in FIG. 3 becomes, and the longer the ride-up distance depicted in FIG. 4 is likely to be. In the present embodiment, the air pressure determination unit 18 of the control device 10 is configured to determine whether the air pressure is sufficiently high based on the ride-up distance.

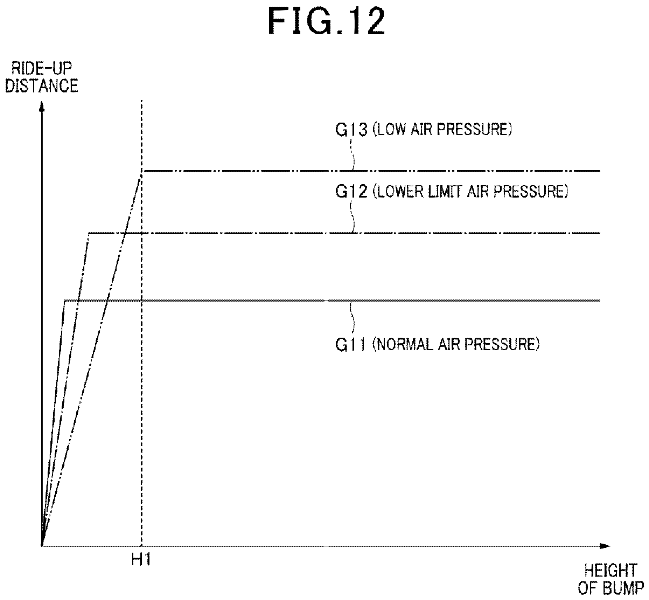

FIG. 12 illustrates a graph representing the correlation between the height of the bump (horizontal axis) and the ride-up distance (vertical axis) when the wheel 111, etc. is in contact with the bump. G11 is a graph in the case where the air pressure in the wheel 111, etc. is at a normal pressure, G12 is a graph in the case where the air pressure in the wheel 111, etc. is at the lower limit pressure (that is, the lower limit of air pressure, at or above which the vehicle 100 can travel normally), and G13 is a graph in the case where the air pressure in the wheel 111, etc. is too low.

As illustrated in FIG. 12, when the height of the bump is equal to or greater than a certain height (H1), the ride-up distance remains almost unchanged regardless of the height of the bump, and changes only depending on the air pressure in the wheel 111, etc. Specifically, the lower the air pressure in the wheel 111, etc., the longer the ride-up distance is likely to be. Such correlation between air pressure and ride-up distance does not hold when the height of the bump is less than H1.

Based on the above findings acquired through experimentation, the present inventors established a method for assessing the air pressure by the air pressure determination unit 18. This method will now be described.

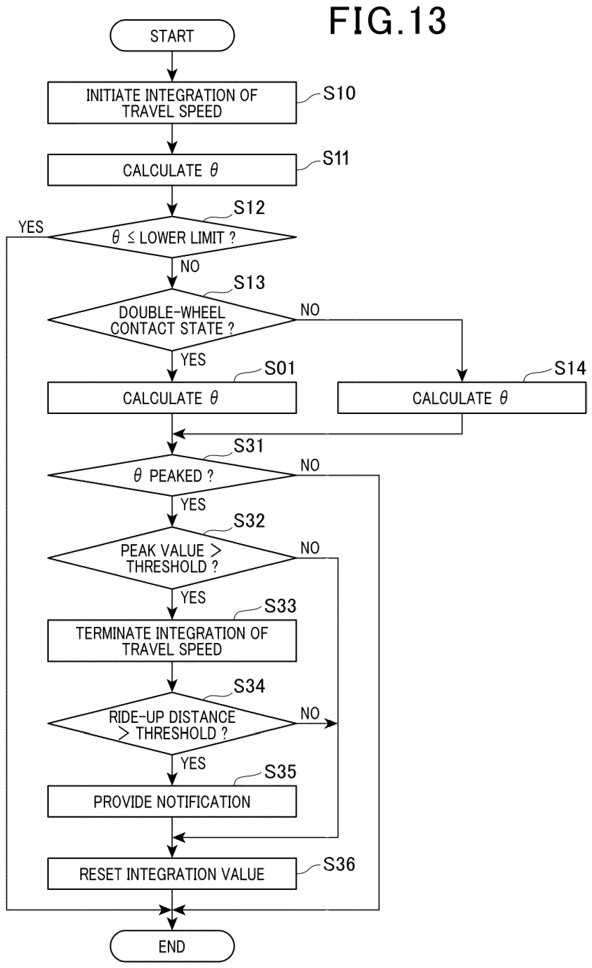

The series of process steps illustrated in FIG. 13 are performed by the control device 10 according to the present embodiment, instead of the series of process steps illustrated in FIG. 9. Of the process steps illustrated in FIG. 13, the process steps that are the same as those illustrated in FIG. 9 are assigned the same reference numbers as those in FIG. 9 (e.g., S11).

First, at step S10, integration of the travel speed of the vehicle 100 is initiated. By initiating the integration, the control device 10 calculates the traveled distance of the vehicle 100, which is a distance traveled by the vehicle 100 after the wheel 111, etc. has come into contact with the bump. The process step S10 is only performed when the process in FIG. 13 is performed for the first time after the wheel 111 etc. has come into contact with the bump. When the process in FIG. 13 is performed again in the next control cycle, the process step S10 is not performed, but integration of the travel speed of the vehicle 100 is continued.

After completion of step S10, the process step S11 and the subsequent steps thereto are performed. After completion of step S01 or S14, in the present embodiment, the process proceeds to step S31.

At step S31, it is determined whether the value of the trajectory angle θ, which is calculated each time step S01 or S14 is completed, has peaked, that is, whether the value of the trajectory angle θ has changed from increasing to decreasing. If the value of the trajectory angle θ has peaked, then the process proceeds to step S32. Otherwise, the process in FIG. 3 is terminated.

At step S32, it is determined whether the peak value of the trajectory angle θ is greater than a predefined threshold. If the peak value is greater than the threshold, the process proceeds to step S33. Otherwise, the process proceeds to step S36 described later.

At step S33, the integration of the travel speed initiated at step S10 is terminated. The distance acquired by the integration until then is acquired as the ride-up distance described above.

At step S34, subsequent to step S33, it is determined whether the calculated ride-up distance is greater than a predefined threshold. The threshold is pre-set to a value of the ride-up distance calculated when the air pressure in the wheel 111 etc. is at the lower limit. If the ride-up distance is greater than the threshold, then the process proceeds to step S35. At step S35, the notification unit 19 provides a notification to the occupants that the air pressure has dropped. The notification unit 19 provides the above notification by operating the notification device 210 (specifically, by turning on the warning light).

At step S36, subsequent to Step S35, the integral of the travel speed is reset to zero. Thereafter, the process illustrated in FIG. 13 is terminated.

At step S34, if the ride-up distance is less than or equal to the threshold, then the process proceeds to step S36 without performing step S35. In this case, since the air pressure in the wheel 111, etc. is presumed to be normal, no notification is provided by the notification unit 19.

As described above, the air pressure determination unit 18 of the present embodiment determines that the air pressure in the wheel 111, etc. is not sufficiently high when the calculated ride-up distance exceeds the predefined threshold. This allows a determination as to whether the air pressure is sufficiently high to be made properly.

The air pressure determination unit 18 calculates the ride-up distance by integrating the travel speed of the vehicle 100. Since an existing sensor is used to measure the vehicle speed, there is no need to install a separate sensor for calculating the ride-up distance.

The air pressure determination unit 18 does not make a determination as to whether the air pressure is sufficiently high when the peak value of the trajectory angle θ is less than or equal to the predefined lower limit (that is, the answer is NO at step S32). In other words, when the height of the bump is estimated to be less than a predefined value, a determination is not made as to whether the air pressure is sufficiently high. This can prevent such a determination from being made even when the height of the bump is lower than H1 in FIG. 12, leading to a false determination regarding the air pressure.

The above embodiments have been described for the case where the vehicle 100 is an electric vehicle that travels by the drive force of the rotating electric machine 150. In an alternative, the vehicle 100 may be a vehicle that travels by the drive force of an internal combustion engine, or may be a hybrid vehicle that travels by the drive force of both the rotating electric machine 150 and the internal combustion engine. In that case, the drive force acquisition unit 11 may acquire the drive force that the vehicle 100 is applying to the road surface based on signals from torque sensors provided to the wheels 111, etc.

The operations of the control device 10 described above are implemented, for example, by a program incorporated in the control device 10. The program causes the control device 10 to calculate the trajectory angle $\theta$, which is the angle between the trajectory of the rotation center axis AX of the wheel 111, etc. included in the vehicle 100 and the road surface, based on the drive force applied by the vehicle 100 to the road surface and the acceleration in the travel direction of the vehicle 100.

The above embodiments have been described with reference to specific examples. However, the present disclosure is not limited to these specific examples. Modifications resulting from appropriate design changes applied by those skilled in the art to these specific examples are also included in the scope of the present invention which is defined by the accompanying claims. The elements, the arrangement of the elements, the conditions, the shapes, and the like of each of the above-described specific examples are not necessarily limited to those exemplified and can be appropriately changed. A combination of the respective elements included in each of the above-described specific examples can be appropriately changed as long as no technical inconsistency exists.

The control devices and methods described herein may be realized using one or more dedicated computers provided by configuring a processor and a memory programmed to execute one or more functions embodied by computer programs. The control devices and methods described herein may be realized using a dedicated computer provided by configuring a processor including one or more dedicated hardware logic circuits. The control devices and methods described herein may be realized using one or more dedicated computers configured by combining a processor and a memory programmed to execute one or more functions with a processor including one or more hardware logic circuits. The computer programs may be stored in a computer-readable, non-transitory tangible storage medium as instructions executed by the computer. A dedicated hardware logic circuit or a hardware logic circuit may be realized by a digital circuit or an analog circuit including a plurality of logic circuits.

**Claims**

1. A control device (10) for a vehicle (100), comprising:

   a drive force acquisition unit (11) that acquires a drive force which the vehicle is applying to a road surface; and
   an acceleration acquisition unit (12) that acquires an acceleration along a travel direction of the vehicle,
   **characterized by**
   an angle calculation unit (13) that calculates a trajectory angle ($\theta$) which is an angle between a trajectory of a rotation center axis (AX) of a wheel (111, 112) of the vehicle and the road surface, based on the drive force and the acceleration.

2. The control device according to claim 1, further comprising
   a ride-over determination unit (14) that determines whether the vehicle should ride over a bump based on the trajectory angle.

3. The control device according to claim 2, further comprising

   a brake/drive force control unit (15) that controls a brake/drive force of the vehicle, wherein
   the brake/drive force control unit controls the brake/drive force to cause the vehicle to ride over the bump, when the ride-over determination unit determines that the vehicle should ride over the bump, and
   the brake/drive force control unit controls the brake/drive force to cause the vehicle to not ride over the bump, when the ride-over determination unit determines that the vehicle should not ride over the bump.

4. The control device according to claim 2, wherein
   the ride-over determination unit determines whether the vehicle should ride over the bump, based on an amount of change in angle that is an amount of change in the trajectory angle when the vehicle has traveled a predefined distance.

5. The control device according to claim 4, wherein

the ride-over determination unit determines that the vehicle should not ride over the bump, when the amount of change in angle exceeds a predefined threshold.

6. The control device according to claim 1, wherein

    the vehicle includes a rotating electric machine (150) for generating the drive force, and
    the drive force acquisition unit acquires the drive force based on a magnitude of current flowing through the rotating electric machine.

7. The control device according to claim 2, wherein
the ride-over determination unit does not determine whether the vehicle should ride over the bump, when the trajectory angle is less than or equal to a predefined lower limit.

8. The control device according to claim 1, further comprising

    a contact determination unit (16) that determines whether the vehicle is in a double-wheel contact state where both left and right wheels are in contact with the bump, or in a single-wheel contact state where only one of the left and right wheels is in contact with the bump, wherein
    the angle calculation unit changes a method for calculating the trajectory angle according to a result of determination by the contact determination unit.

9. The control device according to claim 8, wherein
the contact determination unit determines whether the vehicle is in the double-wheel contact state or in the single-wheel contact state, based on a lateral acceleration of the vehicle.

10. The control device according to claim 8, wherein
the contact determination unit determines whether the vehicle is in the double-wheel contact state or in the single-wheel contact state, based on a rotational speed of each of the left and right wheels.

11. The control device according to claim 10, wherein
the contact determination unit makes the determination based on the rotational speed, only when a travel speed of the vehicle is higher than or equal to a predefined speed.

12. The control device according to claim 2, further comprising

    a bump determination unit (17) that determines whether there is a bump in a vicinity of the vehicle, wherein
    the ride-over determination unit performs a process necessary to determine whether the vehicle should ride over the bump, only when the bump determination unit has previously determined that there is a bump in a vicinity of the vehicle.

13. The control device according to claim 1, further comprising
an air pressure determination unit (18) that determines whether an air pressure of the wheel is sufficiently high, based on the trajectory angle.

14. The control device according to claim 13, further comprising
a notification unit (19) that provides a notification to an occupant of the vehicle when the air pressure is not sufficiently high.

15. The control device according to claim 13, wherein
the air pressure determination unit determines whether the air pressure is sufficiently high based on a ride-up distance that is a distance traveled by the vehicle during a time period from when the trajectory angle begins to increase to when the trajectory angle begins to decrease.

16. The control device according to claim 15, wherein
the air pressure determination unit determines that the air pressure is not sufficiently high, when the ride-up distance exceeds a predefined threshold.

17. The control device according to claim 15, wherein

the air pressure determination unit calculates the ride-up distance by integrating a travel speed of the vehicle.

18. The control device according to claim 13, wherein
the air pressure determination unit does not determine whether the air pressure is sufficiently high, when a peak value of the trajectory angle is less than or equal to a predefined lower limit.

19. A computer program product on a non-transitory computer readable storage medium, having a computer readable program that is **characterized by**, when run on a computer realizing a control device (10) for a vehicle (100), causing the control device to calculate a trajectory angle ($\theta$) which is an angle between a trajectory of a rotation center axis (AX) of a wheel (111, 112) of the vehicle and the road surface, based on an acquired drive force and acceleration of the vehicle.

**Patentansprüche**

1. Steuervorrichtung (10) für ein Fahrzeug (100), mit:

   einer Antriebskraftbezugseinheit (11), die eine Antriebskraft, die das Fahrzeug auf eine Fahrbahn ausübt, bezieht; und
   einer Beschleunigungsbezugseinheit (12), die eine Beschleunigung entlang einer Fahrtrichtung des Fahrzeugs bezieht,
   **gekennzeichnet durch**
   eine Winkelberechnungseinheit (13), die einen Trajektorienwinkel ($\theta$) berechnet, der ein Winkel zwischen einer Trajektorie einer Drehmittelachse (AX) eines Rades (111, 112) des Fahrzeugs und der Fahrbahn ist, basierend auf der Antriebskraft und der Beschleunigung.

2. Steuervorrichtung gemäß Anspruch 1, weiterhin mit
einer Überfahrbestimmungseinheit (14), die auf der Grundlage des Trajektorienwinkels bestimmt, ob das Fahrzeug über eine Unebenheit fahren soll.

3. Steuervorrichtung gemäß Anspruch 2, weiterhin mit

   einer Brems-/Antriebskraft-Steuereinheit (15), die eine Brems-/Antriebskraft des Fahrzeugs steuert, wobei die Brems-/Antriebskraft-Steuereinheit die Brems-/Antriebskraft steuert, um das Fahrzeug zu veranlassen, über die Unebenheit zu fahren, wenn die Überfahrbestimmungseinheit bestimmt, dass das Fahrzeug über die Unebenheit fahren soll, und
   die Brems-/Antriebskraft-Steuereinheit die Brems-/Antriebskraft steuert, um das Fahrzeug zu veranlassen, nicht über die Unebenheit zu fahren, wenn die Überfahrbestimmungseinheit bestimmt, dass das Fahrzeug nicht über die Unebenheit fahren soll.

4. Steuervorrichtung gemäß Anspruch 2, wobei
die Überfahrbestimmungseinheit auf der Grundlage einer Winkeländerungsgröße, die einer Änderung des Trajektorienwinkels entspricht, wenn das Fahrzeug eine vordefinierte Distanz zurückgelegt hat, bestimmt, ob das Fahrzeug über die Unebenheit fahren soll.

5. Steuervorrichtung gemäß Anspruch 4, wobei
die Überfahrbestimmungseinheit bestimmt, dass das Fahrzeug nicht über die Unebenheit fahren soll, wenn die Winkeländerungsgröße einen vordefinierten Schwellenwert überschreitet.

6. Steuervorrichtung gemäß Anspruch 1, wobei

   das Fahrzeug eine rotierende elektrische Maschine (150) zum Erzeugen der Antriebskraft umfasst, und
   die Antriebskraftbezugseinheit die Antriebskraft auf der Grundlage einer Stromstärke erfasst, die durch die rotierende elektrische Maschine fließt.

7. Steuervorrichtung gemäß Anspruch 2, wobei
die Überfahrbestimmungseinheit nicht bestimmt, ob das Fahrzeug über die Unebenheit fahren soll, wenn der Trajektorienwinkel kleiner oder gleich einer vordefinierten Untergrenze ist.

8.  Steuervorrichtung gemäß Anspruch 1, weiterhin mit

    einer Kontaktbestimmungseinheit (16), die bestimmt, ob sich das Fahrzeug in einem Doppelrad-Kontaktzustand, bei dem sowohl das linke als auch das rechte Rad mit der Unebenheit in Kontakt stehen, oder in einem Einzelrad-Kontaktzustand, bei dem nur eines der linken und rechten Räder mit der Unebenheit in Kontakt steht, befindet, wobei
    die Winkelberechnungseinheit ein Verfahren zur Berechnung des Trajektorienwinkels entsprechend einem Ergebnis der Bestimmung durch die Kontaktbestimmungseinheit ändert.

9.  Steuervorrichtung gemäß Anspruch 8, wobei
    die Kontaktbestimmungseinheit auf der Grundlage einer Querbeschleunigung des Fahrzeugs bestimmt, ob sich das Fahrzeug im Doppelrad-Kontaktzustand oder im Einrad-Kontaktzustand befindet.

10. Steuervorrichtung gemäß Anspruch 8, wobei
    die Kontaktbestimmungseinheit auf der Grundlage einer Drehzahl jedes der linken und rechten Räder bestimmt, ob sich das Fahrzeug im Doppelrad-Kontaktzustand oder im Einrad-Kontaktzustand befindet.

11. Steuervorrichtung gemäß Anspruch 10, wobei
    die Kontaktbestimmungseinheit die Bestimmung auf der Grundlage der Drehzahl nur dann vornimmt, wenn eine Fahrgeschwindigkeit des Fahrzeugs größer oder gleich einer vordefinierten Geschwindigkeit ist.

12. Steuervorrichtung gemäß Anspruch 2, weiterhin mit

    einer Unebenheitsbestimmungseinheit (17), die bestimmt, ob sich in der Nähe des Fahrzeugs eine Unebenheit befindet, wobei
    die Überfahrbestimmungseinheit einen Vorgang durchführt, der erforderlich ist, um zu ermitteln, ob das Fahrzeug über die Unebenheit fahren soll, und zwar nur dann, wenn die Unebenheitsbestimmungseinheit zuvor bestimmt hat, dass sich in der Nähe des Fahrzeugs eine Unebenheit befindet.

13. Steuervorrichtung gemäß Anspruch 1, weiterhin mit
    einer Luftdruckbestimmungseinheit (18), die auf der Grundlage des Trajektorienwinkels bestimmt, ob der Luftdruck des Rades ausreichend hoch ist.

14. Steuervorrichtung gemäß Anspruch 13, weiterhin mit
    eine Benachrichtigungseinheit (19), die einen Insassen des Fahrzeugs benachrichtigt, wenn der Luftdruck nicht ausreichend hoch ist.

15. Steuervorrichtung gemäß Anspruch 13, wobei
    die Luftdruckbestimmungseinheit auf der Grundlage einer Anfahrstrecke, die eine Strecke ist, die das Fahrzeug während eines Zeitraums zurücklegt, der von dem Zeitpunkt, zu dem der Trajektorienwinkel zu steigen beginnt, bis zu dem Zeitpunkt reicht, zu dem der Trajektorienwinkel zu sinken beginnt, bestimmt, ob der Luftdruck ausreichend hoch ist.

16. Steuervorrichtung gemäß Anspruch 15, wobei
    die Luftdruckbestimmungseinheit bestimmt, dass der Luftdruck nicht ausreichend hoch ist, wenn die Anfahrstrecke einen vordefinierten Schwellenwert überschreitet.

17. Steuervorrichtung gemäß Anspruch 15, wobei
    die Luftdruckbestimmungseinheit die Anfahrstrecke durch Integration einer Fahrgeschwindigkeit des Fahrzeugs berechnet.

18. Steuervorrichtung gemäß Anspruch 13, wobei
    die Luftdruckbestimmungseinheit nicht bestimmt, ob der Luftdruck ausreichend hoch ist, wenn ein Spitzenwert des Trajektorienwinkels kleiner oder gleich einer vordefinierten Untergrenze ist.

19. Computerprogrammprodukt auf einem nicht-flüchtigen, computerlesbaren Speichermedium, das ein computerlesbares Programm aufweist, das **dadurch gekennzeichnet ist, dass** dieses, wenn es auf einem Computer ausgeführt wird, der eine Steuervorrichtung (10) für ein Fahrzeug (100) realisiert, die Steuervorrichtung veranlasst, einen Trajektorienwinkel (θ) zu berechnen, der ein Winkel zwischen einer Bahn einer Drehmittelachse (AX) eines Rades (111, 112) des Fahrzeugs und der Fahrbahn, basierend auf einer bezogenen Antriebskraft und Beschleunigung des Fahrzeugs.

**Revendications**

1. Dispositif de commande (10) pour un véhicule (100), comprenant :

    une unité d'acquisition de force motrice (11) qui acquiert une force motrice que le véhicule exerce sur une surface routière ; et
    une unité d'acquisition d'accélération (12) qui acquiert une accélération le long d'une direction de déplacement du véhicule,
    **caractérisé par**
    une unité de calcul d'angle (13) qui calcule un angle de trajectoire (θ) représentant un angle entre une trajectoire d'un axe de centre de rotation (AX) d'une roue (111, 112) du véhicule et la surface routière, sur la base de la force motrice et de l'accélération.

2. Dispositif de commande selon la revendication 1, comprenant en outre
une unité de détermination de franchissement (14) qui détermine si le véhicule doit franchir une bosse sur la base de l'angle de trajectoire.

3. Dispositif de commande selon la revendication 2, comprenant en outre

    une unité de commande de force de freinage/motrice (15) qui commande une force de freinage/motrice du véhicule,
    l'unité de commande de force de freinage/motrice commandant la force de freinage/motrice pour amener le véhicule à franchir la bosse, lorsque l'unité de détermination de franchissement détermine que le véhicule doit franchir la bosse, et
    l'unité de commande de force de freinage/motrice commandant la force de freinage/motrice pour amener le véhicule à ne pas franchir la bosse, lorsque l'unité de détermination de franchissement détermine que le véhicule ne doit pas franchir la bosse.

4. Dispositif de commande selon la revendication 2, dans lequel
l'unité de détermination de franchissement détermine si le véhicule doit franchir la bosse, sur la base d'une quantité de variation d'angle représentant une quantité de variation de l'angle de trajectoire lorsque le véhicule a parcouru une distance prédéfinie.

5. Dispositif de commande selon la revendication 4, dans lequel
l'unité de détermination de franchissement détermine que le véhicule ne doit pas franchir la bosse, lorsque la quantité de variation d'angle dépasse un seuil prédéfini.

6. Dispositif de commande selon la revendication 1, dans lequel

    le véhicule comporte une machine électrique tournante (150) destinée à générer la force motrice, et
    l'unité d'acquisition de force motrice acquiert la force motrice sur la base d'une intensité de courant circulant dans la machine électrique tournante.

7. Dispositif de commande selon la revendication 2, dans lequel
l'unité de détermination de franchissement ne détermine pas si le véhicule doit franchir la bosse, lorsque l'angle de trajectoire est inférieur ou égal à une limite inférieure prédéfinie.

8. Dispositif de commande selon la revendication 1, comprenant en outre

    une unité de détermination de contact (16) qui détermine si le véhicule est dans un état de contact par deux roues où les roues gauche et droite sont toutes deux en contact avec la bosse, ou dans un état de contact par une roue unique où seule l'une des roues gauche et droite est en contact avec la bosse,
    l'unité de calcul d'angle modifiant une méthode de calcul de l'angle de trajectoire sur la base d'un résultat de détermination par l'unité de détermination de contact.

9. Dispositif de commande selon la revendication 8, dans lequel
l'unité de détermination de contact détermine si le véhicule est dans l'état de contact par deux roues ou dans l'état de contact par une roue unique, sur la base d'une accélération latérale du véhicule.

10. Dispositif de commande selon la revendication 8, dans lequel
l'unité de détermination de contact détermine si le véhicule est dans l'état de contact par deux roues ou dans l'état de contact par une roue unique, sur la base d'une vitesse de rotation de chacune des roues gauche et droite.

11. Dispositif de commande selon la revendication 10, dans lequel
l'unité de détermination de contact effectue la détermination sur la base de la vitesse de rotation, uniquement lorsqu'une vitesse de déplacement du véhicule est supérieure ou égale à une vitesse prédéfinie.

12. Dispositif de commande selon la revendication 2, comprenant en outre

une unité de détermination de bosse (17) qui détermine si une bosse est présente à proximité du véhicule,
l'unité de détermination de franchissement effectuant un processus nécessaire pour déterminer si le véhicule doit franchir la bosse, uniquement lorsque l'unité de détermination de bosse a préalablement déterminé qu'une bosse est présente à proximité du véhicule.

13. Dispositif de commande selon la revendication 1, comprenant en outre
une unité de détermination de pression d'air (18) qui détermine si une pression d'air de la roue est suffisamment élevée, sur la base de l'angle de trajectoire.

14. Dispositif de commande selon la revendication 13, comprenant en outre
une unité de notification (19) qui fournit une notification à un occupant du véhicule lorsque la pression d'air n'est pas suffisamment élevée.

15. Dispositif de commande selon la revendication 13, dans lequel
l'unité de détermination de pression d'air détermine si la pression d'air est suffisamment élevée sur la base d'une distance de montée représentant une distance parcourue par le véhicule pendant une période de temps allant du moment où l'angle de trajectoire commence à augmenter jusqu'au moment où l'angle de trajectoire commence à diminuer.

16. Dispositif de commande selon la revendication 15, dans lequel
l'unité de détermination de pression d'air détermine que la pression d'air n'est pas suffisamment élevée, lorsque la distance de montée dépasse un seuil prédéfini.

17. Dispositif de commande selon la revendication 15, dans lequel
l'unité de détermination de pression d'air calcule la distance de montée en intégrant une vitesse de déplacement du véhicule.

18. Dispositif de commande selon la revendication 13, dans lequel
l'unité de détermination de pression d'air ne détermine pas si la pression d'air est suffisamment élevée, lorsqu'une valeur maximale de l'angle de trajectoire est inférieure ou égale à une limite inférieure prédéfinie.

19. Produit programme d'ordinateur sur un support de stockage non transitoire lisible par ordinateur, doté d'un programme lisible par ordinateur qui est **caractérisé en ce que**, lorsqu'il est exécuté sur un ordinateur réalisant un dispositif de commande (10) pour un véhicule (100), il amène le dispositif de commande à calculer un angle de trajectoire ($\theta$) représentant un angle entre une trajectoire d'un axe de centre de rotation (AX) d'une roue (111, 112) du véhicule et la surface routière, sur la base d'une force motrice et d'une accélération acquises du véhicule.

16

# FIG.1

# FIG.2

EP 4 516 566 B1

# FIG.3

# FIG.4

# FIG.5

START

CALCULATE $\theta$ — S01

CALCULATE $d\theta/ds$ — S02

$d\theta/ds > TH1$ ? — S03

DETERMINE THAT VEHICLE SHOULD NOT RIDE OVER BUMP — S04

BRING VEHICLE TO STOP — S05

DETERMINE THAT VEHICLE SHOULD RIDE OVER BUMP — S06

ALLOW VEHICLE TO RIDE OVER BUMP — S07

END

# FIG.6

VEHICLE SPEED

(A)

G1

G2

0           TIME

t1

ACCELERATION

G3    G4

0           TIME

(B)

$\theta$

(C)

0           TIME

t1

TORQUE

0           TIME

(D)

t1

# FIG.7

# FIG.8

# FIG.9

START

CALCULATE $\theta$ — S11

S12
$\theta \leq$ LOWER LIMIT ?

YES

NO

S13
DOUBLE-WHEEL CONTACT STATE ?

NO

YES

CALCULATE $\theta$ — S01

CALCULATE $\theta$ — S14

CALCULATE $d\theta/ds$ — S02

CALCULATE $d\theta/ds$ — S15

S03
$d\theta/ds >$ TH1 ?

NO

YES

S16
$\theta >$ TH2 ?

NO

YES

DETERMINE THAT VEHICLE SHOULD NOT RIDE OVER BUMP — S04

DETERMINE THAT VEHICLE SHOULD RIDE OVER BUMP — S06

BRING VEHICLE TO STOP — S05

ALLOW VEHICLE TO RIDE OVER BUMP — S07

END

# FIG.10

DETERMINATION OF
CONTACT STATE

S21

$V_X < 1km/h$ ?

NO

YES

S25

| DIFFERENCE
BETWEEN DIFFERENTIAL
VALUES OF LEFT AND
RIGHT WHEEL SPEEDS |
> 0.2 G ?

NO

YES

S22

| $G_y$ | > 0.05G ?

NO

YES

S23

DETERMINED TO BE IN
SINGLE-WHEEL CONTACT STATE

S24

DETERMINED TO BE IN
DOUBLE-WHEEL CONTACT STATE

RETURN

# FIG.11

# FIG.12

RIDE-UP
DISTANCE

G13 (LOW AIR PRESSURE)

G12 (LOWER LIMIT AIR PRESSURE)

G11 (NORMAL AIR PRESSURE)

H1

HEIGHT
OF BUMP

# FIG.13

START

INITIATE INTEGRATION OF TRAVEL SPEED — S10

CALCULATE $\theta$ — S11

S12
$\theta \leq$ LOWER LIMIT ? — YES

NO

S13
DOUBLE-WHEEL CONTACT STATE ? — NO

YES

CALCULATE $\theta$ — S01

CALCULATE $\theta$ — S14

S31
$\theta$ PEAKED ? — NO

YES

S32
PEAK VALUE > THRESHOLD ? — NO

YES

TERMINATE INTEGRATION OF TRAVEL SPEED — S33

S34
RIDE-UP DISTANCE > THRESHOLD ? — NO

YES

PROVIDE NOTIFICATION — S35

RESET INTEGRATION VALUE — S36

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019093761 A

- US 2020361464 A1